(19) **Europäisches Patentamt / European Patent Office / Office européen des brevets**

(11) **EP 4 667 417 A1**

(12) **EUROPEAN PATENT APPLICATION**
published in accordance with Art. 153(4) EPC

(43) Date of publication:
24.12.2025 Bulletin 2025/52

(21) Application number: 24780499.0

(22) Date of filing: 27.03.2024

(51) International Patent Classification (IPC):
$C01B\ 33/18^{(2006.01)}$    $C08K\ 3/36^{(2006.01)}$
$C08K\ 5/053^{(2006.01)}$    $C08K\ 5/548^{(2006.01)}$
$C08L\ 21/00^{(2006.01)}$    $C09C\ 1/28^{(2006.01)}$

(52) Cooperative Patent Classification (CPC):
C01B 33/18; C08K 3/36; C08K 5/053; C08K 5/548;
C08L 21/00; C09C 1/28

(86) International application number:
PCT/JP2024/012335

(87) International publication number:
WO 2024/204397 (03.10.2024 Gazette 2024/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.03.2023   JP 2023058362
15.06.2023   JP 2023098614
24.08.2023   JP 2023136383

(71) Applicant: **TOKUYAMA CORPORATION**
Yamaguchi 745-8648 (JP)

(72) Inventor: **NAKAMURA Masahiro**
Shunan-shi, Yamaguchi 745-8648 (JP)

(74) Representative: **Canzler & Bergmeier**
**Patentanwälte**
**Partnerschaft mbB**
**Despag-Straße 6**
**85055 Ingolstadt (DE)**

(54) **FUMED SILICA FOR RUBBER COMPOSITION AND METHOD FOR COMPRESSING FUMED SILICA**

(57)   [Problem] To provide a fumed silica which can be sufficiently dispersed in a rubber component even when the number of portions in which the fumed silica is blended portionwise is small, and to provide a method for compressing the fumed silica. [Solution] A fumed silica for a rubber composition has a tap density of 200 g/L or more, and also has a pore peak radius of 22 nm or more and a pore volume of 1.6 mL/g or more when measured by applying the BJH method to an adsorption isotherm obtained by nitrogen adsorption. It is preferable that the BET specific surface area of the fumed silica for a rubber composition is 180 $m^2$/g to 500 $m^2$/g inclusive.

EP 4 667 417 A1

**Description**

TECHNICAL FIELD

The present disclosure relates to a fumed silica for rubber composition and a method for compressing the fumed silica. Specifically, the present disclosure relates to a fumed silica capable which can disperse easily and sufficiently in a rubber component, and the present disclosure also relates to a method for compressing the fumed silica.

BACKGROUND

For automobile tires, longer running lifespan is demanded in addition to good fuel efficiency. To achieve longer running lifespan, it is necessary to improve wear resistance and heat aging resistance of the tires. In order to improve the wear resistance, carbon black as a reinforcing filler has been blended in the tire rubber composition.

On the other hand, silica produced by wet-process is known to be effective to improve fuel efficiency; however, when silica produced by wet-process is blended, wear resistance is lowered compared to the wear resistance in the case of blending carbon black. Therefore, when silica produced by wet-process is used as the reinforcing filler, the blended amount of carbon black is partially replaced by silica produced by wet-process; hence, the blended amount of carbon black decreases in relativity. Therefore, it is known that a decrease in the wear resistance of the tire rubber material is inevitable.

Patent Document 1 proposes to replace part of silica produced by wet-process with dry silica. Patent Document 1 discloses that dry silica improves fuel efficiency than silica produced by wet-process, and also discloses that dry silica can suppress a rubber hardness from lowering.

PRIOR DOCUMENTS

PATENT DOCUMENTS

Patent Document 1: Patent Application Laid Open No.2016-104840

SUMMARY

PROBLEMS TO BE SOLVED BY THE INVENTION

However, in Patent Document 1, dry silica is thought to be blended in a bulky state. When such bulky dry silica (low tap density) is blended using a Banbury mixer, which is a generally known kneading machine for a rubber composition, there is a risk that dry silica may not blend with the rubber component, and hence losing the dry silica. Hence, it was necessary that the expected blending amount of dry silica to be divided into several portions. However, as the number of times that the dry silica is blended increases, the productivity was lowered.

The present disclosure was achieved in view of such circumstances, and the object is to provide a fumed silica which can sufficiently disperse in a rubber component even when the number of times that fumed silica is blended is decreased; and also, the object is to provide a method for compressing the fumed silica.

MEANS FOR SOLVING THE OBJECTS

The present inventor has found that even when a fumed silica with an increased tap density is used, an aggregated particle of several tens $\mu$m may be formed in an unvulcanized or vulcanized rubber. Based on this finding, the present inventor has discovered that not only by increasing the tap density, but also by making a pore structure on a surface of the fumed silica to a predetermined structure, the fumed silica can be sufficiently dispersed in the rubber component even when the number of times that the fumed silica is blended is decreased. Thereby, the present disclosure was achieved.

As discussed in above, the embodiment of the present disclosure is as described in below.

[1] A fumed silica for rubber composition having a tap density of 200 g/L or greater, a pore peak radius of 22 nm or larger obtained by applying a BJH method to a nitrogen absorption isotherm, and a pore volume of 1.6 mL/g or greater.
[2] The fumed silica for rubber composition according to [1], wherein a BET specific surface area of the fumed silica for rubber composition is between 180 $m^2$/g or greater and 500 $m^2$/g or less.
[3] The fumed silica for rubber composition according to [1] or [2], wherein the fumed silica for rubber composition is an untreated fumed silica for rubber composition.
[4] A method for compressing a fumed silica, wherein uniaxial compression is performed to a fumed silica having a tap density of less than 200 g/L to obtain a compressed fumed silica having a tap density of 200 g/L or greater.

EFFECTS OF THE INVENTION

According to the present disclosure, a fumed silica which can sufficiently disperse in a rubber component even when the number of times that the fumed silica is blended in the rubber component is decreased; and also, the present disclosure provides a method for compressing such fumed silica.

DETAILED DESCRIPTION

In below, details of the present disclosure are described in the order as shown in below based on a specific embodiment.

1. Fumed silica for Rubber Composition
2. Method for Compressing Fumed silica

2.1. Using Ball Mill
2.2. Using Vibration Mill
2.3 Using Uniaxial Compressor

3. Rubber Composition

3.1. Diene-Based Rubber
3.2. Silane Coupling Agent
3.3. Blending Amount of Each Component
3.4. Other Components

4. Method for Producing Rubber Composition

(1. Fumed silica for Rubber Composition)

A fumed silica for rubber composition according to the present embodiment is a fumed silica which is used to blend with a rubber composition, and particularly it is preferably used for a tire rubber composition. Fumed silica is silicon dioxide in a fine particle form produced by hydrolyzing silicon tetrachloride at high temperature in oxyhydrogen flame. Thus, such fumed silica is called dry silica and a method for producing this is different from a method for producing a silica produced by wet-process such as a precipitation method and a gelation method. Among silica produced by wet-process, a silica produced by a precipitation method which is generally used as a reinforcing material of rubber has a specific surface area of about 200 $m^2$/g, and the fumed silica having a specific surface area of about 400 $m^2$/g is used as a reinforcing material of silicone rubber and so on. Hence, because the fumed silica has a high specific surface area, the fumed silica has a smaller primary particle size of a primary aggregate (minimal configurational unit) than silica produced by a precipitation method. Particles of fumed silica are aggregated and fused in a beaded-form, and form a bulky agglomerate.

In the present embodiment, the tap density of the fumed silica for rubber composition is 200 g/L or greater. Since the fumed silica is bulky as described in above, usually the tap density of the fumed silica is lower than 200 g/L. Thus, when the tap density of the fumed silica is low (when the fumed silica is bulky), the fumed silica for rubber composition according to the present embodiment is preferably a fumed silica having increased tap density by compressing a fumed silica (a compressed fumed silica).

Because the tap density of the fumed silica for rubber composition is 200 g/L or greater, even in the case of blending and kneading the fumed silica for rubber composition with the rubber component, the fumed silica can be sufficiently dispersed in the tire rubber composition. Further, even in the case of using a Banbury mixer which is difficult to knead a bulky component, the fumed silica for rubber composition can be sufficiently kneaded with other components since bulkiness is suppressed.

The tap density of the fumed silica for rubber composition is preferably 250 g/L or greater, or more preferably 300 g/L or greater. The upper limit of the tap density is not particularly limited, and for example, from a manufacturing point of view, it is 320 g/L or less.

Also, in the present embodiment, the bulkiness of the fumed silica for rubber composition may be evaluated using a parameter other than the above-mentioned tap density. For example, the bulkiness of the fumed silica for rubber composition may be evaluated using an apparent density obtained using a tamped packing method defined in JIS K5101-12-2.

The apparent density of the fumed silica for rubber composition obtained using a tamped packing method is preferably between 150 g/L or greater and 250 g/L or less, or more preferably between 170 g/L or greater and less than 200 g/L. Details of a method for measuring an apparent density obtained using a tamped packing method are described in Examples.

A method for compressing the fumed silica is described in detail later, and examples of the method for compressing the fumed silica include a method of compressing using a ball mill, and a method of compressing using a vibration mill. In these methods, the fumed silica is compressed between balls, or between a ball and a mill container. When compression is carried out in a small contact area using such hard material, an aggregated particle with low dispersibility (for example, a particle having a particle size of 20 $\mu$m or larger) may be formed due to a mechanochemical reaction. As a result, even though the tap density of the fumed silica is high and the number of times that the fumed silica is blended is decreased, an aggregated particle caused by insufficient dispersion of the fumed silica may be formed in the rubber composition.

The present inventor speculated that a pore is formed on the surface of the fumed silica by the compression and a pore size is small enough to prevent the silane coupling agent, which improves the wettability between the rubber component and the fumed silica and functions to crosslink them, from penetrating. Thus, an impregnation speed of the silane coupling agent into the aggregate particle of the fumed silica is slowed down. As a result, the silane coupling agent cannot uniformly and sufficiently react; thereby, dispersibility is lowered.

Thus, the fumed silica for rubber composition according to the present embodiment has a pore peak radius of 22 nm or larger obtained by applying a BJH method to a nitrogen absorption isotherm, and a pore volume of 1.6 mL/g or greater. The fumed silica for rubber composition which the pore on the surface of the fumed silica is regulated as such can sufficiently react with the silane coupling agent even when the tap density is high, and it is possible to suppress the formation of the aggregate particle.

The pore peak radius is preferably 30 nm or larger, or more preferably 50 nm or larger. Also, the upper limit of the pore peak radius is not particularly limited, and for example it is 85 nm.

A pore volume is preferably 2 mL/g or greater, or more preferably 4 mL/g or greater. Also, the upper limit of the pore volume is not particularly limited, and for example, it is 6 mL/g.

Note that, the above-mentioned pore peak radius and pore volume are physical values obtained by applying a BJH method to a nitrogen absorption isotherm. A nitrogen adsorption isotherm can be obtained by measurement analysis under the conditions where nitrogen is adsorbed at liquid nitrogen temperature onto a sample that has been degassed at a pressure of 1 Pa or lower at 150°C.

Also, in the present embodiment, the BET specific surface area of the fumed silica for rubber composition is preferably 180 $m^2$/g or greater, more preferably 200 $m^2$/g or greater, or even more preferably 250 $m^2$/g or greater. When the BET specific surface area of the fumed silica for rubber composition is within the above-mentioned range, a sufficient number of silanol groups in the fumed silica for rubber composition can be secured which become reaction points with the diene-based rubber or the silane coupling agent.

The upper limit of the BET specific surface area of the fumed silica for rubber composition is not particularly limited, and for example, it is 500 $m^2$/g. When the BET specific surface area of the fumed silica for rubber composition is too small, it becomes necessary to increase the flame temperature during the production of the fumed silica, which may lead to a loss of the fumed silica-specific structure, and the stable production of the fumed silica tends to be difficult. When the BET specific surface area of the fumed silica for rubber composition is too large, the stable production of the fumed silica for rubber composition tends to be difficult. Note that, the above-mentioned BET specific surface area is a specific surface area measured using a nitrogen absorption BET method.

Also, the fumed silica includes a siloxane bond, and in addition to the siloxane group, a silanol group which a hydroxy group is bonded to a silicon atom exists on the surface of the fumed silica. Density of the silanol groups on the surface of the fumed silica (a surface silanol group density) is lower than silica produced by wet-process due to different production methods. In the present embodiment, the surface silanol group density of the fumed silica for rubber composition is 3 groups/$nm^2$ or less. By having the surface silanol group density within the above-mentioned range, while maintaining an amount of the silanol groups which are reaction sites between coupling agent, it is possible to prevent a decrease in the wettability with a rubber which is caused when water adheres on the surface of silica; thereby, an enhanced fine dispersibility can be expected. Also, an aggregation of a powder material having large amount of absorbed water increases during a compression step; however, silica aggregation during this compression step can be prevented.

The surface silanol group density can be measured, for example, by methods such as Karl-Fischer method, an Igloss method, or an active hydrogen titration method using Grignard reagents.

Also, the silanol group tends to absorb water. Hence, a surface treatment to lower reactivity against water may be carried out by reacting the silanol group with other substances. A fumed silica which has been surface-treated is called a surface-treated fumed silica, and a fumed silica which has not been surface-treated is called an untreated fumed silica.

In the present embodiment, the surface treated fumed silica and the untreated fumed silica are distinguished using a modified hydrophobic degree (M-value) shown below. The modified hydrophobic degree (M-value) is a value obtained by a measurement method using the property that the surface treated fumed silica floats in water but completely suspends in methanol. As a method for measuring the M-value, a method described in examples of WO 2004/099075 can be used. When the surface treated fumed silica and the untreated fumed silica are represented using the M-value, the surface treated fumed silica has the M-value of 1 or greater, and the untreated fumed silica has the M-value of less than 1.

In the present embodiment, from the point that the silane coupling agent has a bulky molecular structure which allows a sufficient amount to react on the silica surface, the untreated fumed silica for rubber composition is preferable as the fumed silica for rubber composition, because the untreated fumed silica has a small amount of water which initiates selfcondensation of the coupling agent, and also because the untreated fumed silica has a sufficient number of silanol groups which are reaction sites.

(2. Method for Compressing Fumed silica)

The tap density of the fumed silica for rubber composition according to the present embodiment is 200 g/L or greater. However, because of its production method, the fumed silica is bulky; thus, the tap density tends to be low. Therefore, the fumed silica for rubber composition having the tap density of 200 g/L or greater is generally obtained by compressing the fumed silica.

As mentioned in above, examples of the method for compressing the fumed silica include a compression method using a ball mill, and a compression method using a vibration mill. However, in the case of a usual compression method, a pore on the surface of the fumed silica tends to become too small due to compression, and when the pore is too small, the speed of the silane coupling agent impregnating and diffusing into the aggregate silica particle may slow down.

Thus, in order to easily achieve the pore peak radius and the pore volume after compression within the above-mentioned ranges, the surface of the fumed silica may be partially coated prior to the compression. Examples of the coating include surfactants and waxes. As the surfactants, non-ionic surfactants are preferable. Examples of the non-ionic surfactants include fatty acid-based surfactants such as coconut oil fatty acid N-methylethanolamide, and alkylamine ether-based surfactants such as N,N',N'-tris(2-hydroxyethyl)-N-alkyl(C14 to C18)-1,3-diaminopropane which is an ethylene oxide adduct of alkyl diamine. Also, hydrocarbon-based wax is preferable as a wax, and examples include paraffin wax. As the paraffin wax, a general paraffin wax having a melting point of around 60 to 80°C, a paraffin wax usually used for an anti-aging agent for tires, and so on are preferable. Examples of a coating method include, a method of spraying a melted wax using one-fluid or two-fluid nozzle into a mixer where the fumed silica is mixed and stirred, and a method of mixing the fumed silica and wax particles of fine powder form and then heating at a temperature higher than a melting point of wax in order to melt the wax and diffuse it into the silica surface.

Also, in the case of using a uniaxial compressor, a ball mill or a vibration mill as the method for compressing the fumed silica, below described compression treatment conditions are preferably applied.

(2.1. Using Ball Mill)

When a ball size is small, a curvature is small; hence, compression force from the ball tends to be a point load, and when a ball size is large, the compression force tends to be a plane load. Thus, preferably, the ball size of a ball mill is a diameter of 27 to 60 mm, or more preferably 32 to 45 mm. When the ball size is too small, the impact force caused by the load concentration during pulverization compression becomes too strong which causes the pore structure of the surface of the fumed silica to change; thus, there is a tendency that the above-mentioned ranges are not satisfied. When a ball size is too large, the same capacity is filled with fewer balls; thus, frequency of collisions decreases. Therefore, it will take longer time to pulverize, and this may lead to increase of production cost.

A rotational speed of the ball mill is preferably 50 to 600 rpm, or more preferably 200 to 400 rpm. When the rotational speed is too low, the ball does not fall and it will simply roll along the surface of the pot wall. Hence, in such case, the impact force during pulverization is not enough; thus, the tap density of the fumed silica may not become high. Also, when the rotational speed is too low, it is necessary to extend a pulverization time to achieve the tap density of the fumed silica of 200 g/L or greater, and this may lead to a decreased productivity and the production cost may increase. When the rotational speed is too high, pulverization efficiency may decrease.

A ball filling factor of the ball mill is preferably 10 to 80%, or more preferably 20 to 50%. When the ball filling factor is too low, there may be a risk that the tap density of the fumed silica does not become high due to insufficient pulverization efficiency. Also, when the ball filling factor is too low, it is necessary to extend a pulverization time to achieve the tap density of the fumed silica of 200 g/L or greater; and this may lead to a decreased productivity and the production cost may increase. When the ball filling factor is too high, the amount of the material filled decreases, thus the pulverization efficiency may decrease.

(2.2. Using Vibration Mill)

A ball mill size or a rod size of a vibration mill is preferably a diameter of 27 mm or larger, or more preferably 32 to 60 mm. When a ball size or a rod size is too small, impact during pulverization becomes too strong, and the pore structure of the surface of the fumed silica changes. Hence, there is a tendency that the above-mentioned ranges are not satisfied. When the ball size is too large, a space between the balls is large; thus, the frequency of collision decreases and the pulverization time becomes longer. However, the production cost may increase.

A vibration frequency of the vibration mill is preferably 600 to 2000 CPM, or more preferably 800 to 1500 CPM. When the frequency is too low, the impact force during pulverization is not enough; thus, the tap density of the fumed silica may not be high. Also, when the frequency is too low, it is necessary to extend a pulverization time to achieve the tap density of the fumed silica of 200 g/L or greater, and this may lead to a decreased productivity and the production cost may increase. When the frequency is too high, the impact force becomes too strong, and a stable pulverization may not be achieved.

The ball filling factor of the vibration mill is preferably 30 to 90%, or more preferably 30 to 50%. When the ball filling factor is too low, there may be a risk that the tap density of the fumed silica does not become high due to insufficient pulverization efficiency. Also, when the ball filling factor is too low, it is necessary to extend a pulverization time to achieve the tap density of the fumed silica of 200 g/L or greater, and this may lead to a decreased productivity and the production cost may increase. When the ball filling factor is too high, pulverization efficiency may decrease.

(2.3. Using Uniaxial Compressor)

A uniaxial compressor is a device which pushes powder using a degassing screw or so into the space between pressor rollers facing each other; and thereby, the powder is compressed by uniaxial compressing force between the rollers. In the case that sufficient small clearance can be maintained between the rollers, uniaxial compression force is applied continuously and uniformly on the powder. On the other hand, in the case of a ball mill compression, the compression force tends to easily become point load, and there is a possibility that compression is repeatedly applied on the same aggregate particle. Therefore, compared to the device such as a vibration mill or a ball mill, by using the uniaxial compressor, distribution of an apparent density of compressed powder becomes narrow. Also, it is possible to prevent the increase of the silanol groups due to a mechanochemical effect. In the case of adjusting a compression degree of the powder, a bulk density can be controlled by adjusting a supply amount of powder using a degassing screw, by adjusting a pressure applied between the rollers, and by adjusting a rotational speed of the rollers. In general, when the rotational speed of the rollers is slowed down, the pressure between the rollers is increased, and the rotational speed of the rollers is slowed down; hence, it is easier to obtain a high bulk density product. If a low bulk density product is needed, conditions opposite of the above may be used.

(3. Rubber Composition)

In the present embodiment, the rubber composition includes the above-mentioned fumed silica for rubber composition, the diene-based rubber, and the silane coupling agent. The rubber composition preferably further includes diol. Also, the rubber composition is preferably a tire rubber composition.

(3.1. Diene-Based Rubber)

The diene-based rubber included in the rubber composition is preferably at least one selected from a natural rubber, an isoprene rubber, a butadiene rubber, a styrene-butadiene rubber, an acrylonitrile-butadiene rubber, a butyl rubber, an ethylene-propylene-diene rubber, and a chloroprene rubber. An amount of each of the above-mentioned rubbers constituting the diene-based rubber may be determined accordingly depending on the use and so on. Among these, preferably at least one is selected from a natural rubber and a styrene butadiene rubber.

Examples of the natural rubber includes modified natural rubbers such as a natural rubber (NR), an epoxidized natural rubber (ENR), a hydrogenated natural rubber (HNR), a deproteinized natural rubber (DPNR), and a high purity natural rubber (HPNR). These natural rubbers may be used alone, or may be used by combining two or more natural rubbers. In the present embodiment, NR is preferable as a natural rubber.

Examples of the styrene butadiene rubber (SBR) include a native solution polymerized SBR (S-SBR), a native emulsion polymerized SBR (E-SBR), and modified SBR thereof (modified S-SBR and modified E-SBR).

(3.2. Silane Coupling Agent)

The diene-based rubber which is hydrophobic and the above-mentioned fumed silica for rubber composition including the silanol group which is hydrophilic have low affinity; thus, it is difficult to mix these two while kneading. Thus, by blending the silane coupling agent, a crosslinking structure between the diene-based rubber and the fumed silica for rubber composition is easily formed via the silane coupling agent. Thus, the fumed silica tends to easily disperse uniformly in the diene-based rubber. As a result, it is possible to suppress a formation of a coarse fumed silica which did not disperse in the rubber.

The silane coupling agent is not particularly limited, as long as it is usually used for the rubber composition. In the present embodiment, a sulfur-containing silane coupling agent is preferable. Examples of the sulfur-containing silane coupling agent include a sulfide-based silane coupling agent, a mercapto-based silane coupling agent, and a thioester-based silane coupling agent. Examples of the sulfide-based silane coupling agent include bis(3-triethoxysilylpropyl) tetrasulfide, bis(3-triethoxysilylpropyl)disulfide, and 3-trimethoxysilylpropylbenzothiazole tetrasulfide. Examples of the mercapto-based silane coupling agent include $\gamma$-mercaptopropyltriethoxysilane and mercapto-thiocarboxylate oligomers. Examples of the thioester-based silane coupling agent include 3-octanoylthiopropyltriethoxy silane.

(3.3. Diol)

Diol is a divalent alcohol, and it is a hydrocarbon containing two hydroxy groups. By blending diol, even though the Mooney viscosity of the tire rubber composition decreases, the A hardness of the tire rubber material increases; thus, the blending amount of the fumed silica can be reduced. As a result, the fuel efficiency and the wear resistance of the tire rubber material are improved. Further, by blending diol together with the above-mentioned silane coupling agent, the tire rubber material with good heat aging resistance can be obtained. Note that, such effect tends to be difficult to attain when monovalent alcohol and trivalent or higher alcohol are used.

In the present embodiment, preferable examples of diol include propylene glycol, 1,3-propanediol, dipropylene glycol, diethylene glycol, and polyethylene glycol having a polymerization degree of approximately 200 to 1000. Among these, propylene glycol, 1,3-propanediol, dipropylene glycol, diethylene glycol, and polyethylene glycols having a polymerization degree of 300 to 500 are more preferable.

(3.4. Blending Amount of Each Component)

The blending amount of the fumed silica for rubber composition according to the present embodiment is preferably between 10 parts by mass or more and 70 parts by mass or less with respect to 100 parts by mass of the diene-based rubber. When the blending amount of the fumed silica for rubber composition is within the above-mentioned range, it is possible to obtain the rubber composition in which the fumed silica for rubber composition is sufficiently dispersed. When the blending amount of the fumed silica for rubber composition is too much, the fumed silica cannot sufficiently disperse in the rubber component, and a good kneaded material tends to be difficult to obtain.

The blending amount of the fumed silica for rubber composition is preferably 20 parts by mass or more, or more preferably 32 parts by mass or more with respect to 100 parts by mass of the diene-based rubber. Also, the blending amount of the fumed silica for rubber composition is more preferably 60 parts by mass or less, or even more preferably 50 parts by mass or less with respect to 100 parts by mass of the diene-based rubber.

From the point of enhancing dispersibility of the fumed silica by increasing the wettability against the rubber on the fumed silica surface, the blending amount of the silane coupling agent (the amount of the silane coupling agent in the tire rubber composition) is between 0.50 $\mu$mol/m$^2$ or more and 3.9 $\mu$mol/m$^2$ or less with respect to the BET specific surface area per 1 g of the fumed silica.

By having the blending amount of the silane coupling agent within the above-mentioned range, the diene-based rubber and the fumed silica for rubber composition are sufficiently dispersed; hence, the rubber composition in which the fumed silica for rubber composition sufficiently dispersed in the rubber component can be obtained. When the blending amount of the silane coupling agent is too much, the coupling agent acts similar to a plasticizer, and the viscosity of the rubber composition becomes too low. Thus, the fumed silica is not sufficiently dispersed in the rubber component, and it tends to be difficult to obtain a good kneaded material. Also, hardness of the vulcanized rubber tends to decrease; thus, an amount of the filler needed to achieve the same hardness tends to increase, and fuel efficiency tends to decline.

The blending amount of the silane coupling agent is more preferably 0.7 $\mu$mol/m$^2$ or more with respect to the specific surface area of the fumed silica.

Since diol lowers viscosity of a kneaded rubber, the blending amount may be determined depending on the specific surface area of the fumed silica, as similar to the case of the silane coupling agent. The blending amount of diol (the amount of diol in the rubber composition) is between 3 $\mu$mol/m$^2$ or more and 14 $\mu$mol/m$^2$ or less with respect to the BET specific surface area per 1 g of the fumed silica.

Said blending amount is preferably 3.4 $\mu$mol/m$^2$ or more, or more preferably 6.8 $\mu$mol/m$^2$ or more. Also, said blending amount is preferably 11 $\mu$mol/m$^2$ or less.

(3.5. Other Components)

In the present embodiment, in addition to the above-mentioned components (the diene-based rubber, the fumed silica for rubber composition, and the silane coupling agent), the rubber composition may include other usual components which may be included in a rubber composition. Examples of such component include lubricants. By blending the lubricants, the kneadability of each component is improved, and the rubber composition in which each component is sufficiently dispersed can be easily obtained.

Examples of the lubricants include stearic acid and process oils. Single lubricant may be used, or two or more lubricants may be used together. Examples of the process oils include paraffin oil, naphthenic oil, and aroma oil such as mineral oil and synthetic oil. These may be used alone, or two or more may be used together.

The blending amount of the lubricant (the amount of the lubricant in the rubber composition) is not particularly limited. For example, the blending amount of the lubricant is preferably between 2 parts by mass or more and 60 parts by mass or less with respect to 100 parts by mass of the diene-based rubber. Further, the blending amount of the lubricant is preferably 4 parts by mass or more, or more preferably 30 parts by mass or less with respect to 100 parts by mass of the diene-based rubber.

When the blending amount of the lubricant is too small, the viscosity increases and the kneadability is compromised, thus there is a risk that the fumed silica for rubber composition may not sufficiently disperse in the diene-based rubber. When the blending amount of the lubricant is too much, shearing may not be carried out during kneading, and thus there is a risk that the fumed silica for rubber composition may not sufficiently disperse in the diene-based rubber.

Further, the rubber composition may include a reinforcing filler in addition to the fumed silica for rubber composition. Examples of the reinforcing filler include carbon black, silica produced by wet-process, clay, mica, talc, calcium carbonate, aluminum hydroxide, aluminum oxide, and titanium oxide. When the reinforcing filler is blended, an appropriate amount of a filler coupling agent can be blended as well. The blending amount of these additives is not particularly limited as long as the effect of the present disclosure is attained, and the blending amount may be an usual amount.

Further, the rubber composition may include various additives such as zinc oxide, antioxidants, plasticizers, processing aids, liquid polymers, and heat curable resins. The blending amount of these additives is not particularly limited as long as the effect of the present disclosure is attained, and the blending amount may be an usual amount.

(4. Method for Producing Rubber Composition)

The above-mentioned rubber composition is obtained by kneading the above-mentioned diene-based rubber, the above-mentioned fumed silica for rubber composition, the above-mentioned silane coupling agent, and other components which are added if needed.

In the present embodiment, the master batch obtained by kneading the predetermined components is produced, and then the rest of the components are added and kneaded with the master batch; thereby, the rubber composition may be produced. Alternatively, all of the components may be kneaded together to form the rubber composition.

In the case of producing the master batch, the above-mentioned diene-based rubber, the above-mentioned fumed silica for rubber composition, the above-mentioned silane coupling agent, and other components which are added if needed are preferably kneaded to produce the master batch.

After producing the master batch, by blending and kneading other components with the master batch, the rubber composition is obtained. The present embodiment includes the fumed silica for rubber composition having the tap density of 200 g/L or greater, thus, for example even when kneading is carried out using a Banbury mixer, the rubber composition in which the fumed silica is sufficiently dispersed in the rubber component can be obtained.

Kneading conditions may be set to conditions which allow each component to be kneaded sufficiently.

The above-mentioned rubber composition is suitable as a tire rubber composition. By using the rubber composition according to the present embodiment as a tire rubber composition, a tire rubber material having excellent fuel efficiency, wear resistance, and heat aging resistance can be obtained. The tire rubber material is obtained by vulcanizing the tire rubber composition.

Such tire rubber material can be suitably used for tires of passenger automobiles, tires of trucks and buses, etc. Also, it can be suitably used as configurational parts of tires. Among these, the tire rubber material can be suitably used as a tread, a base tread, a side wall, and a clinch.

The embodiment of the present disclosure is described hereinabove. However, the present disclosure is not limited to the above-mentioned embodiment, and various modifications are possible within the scope of the present disclosure.

EXAMPLES

In below, the present disclosure is described in further details using examples. Note that, the present disclosure is not limited to below described examples.

(Experiment 1)

(Preparation of Tire Rubber Composition)

In Experiment 1, a diene-based rubber was an SBR-based rubber. Below components (A) to (D) and (E-1) to (E-4) were placed in Labo Plastomill (BB600, manufactured by Toyo Seiki Seisaku-sho, Ltd.) of a Banbury mixer type having a capacity of 0.6 L so that the blending amounts of the components with respect to 100 parts by mass of the SBR-based rubber satisfied the amounts shown in Table 1. After placing the components in Labo Plastomill, the components were kneaded at a rotor rotational speed between 20 to 100 rpm so that a temperature of a kneaded material was between a temperature range of 140 to 150°C and after reaching the temperature, kneading was performed for 5 minutes. An air cylinder pressure was 0.5 MPa. After kneading was completed, a kneaded material was cooled to room temperature, and a kneaded product was taken out.

Each component was placed in Plastomill by calculating blending amounts of the diene-based rubber and other additives so that a fill factor after kneading was 70%; and then, kneading was carried out. Note that, the number of times that filler was added was twice.

(A) Diene-based rubber

(A-1) SBR (S-SBR E-581, manufactured by Asahi Kasei Corporation)
(A-2) BR (BR01, manufactured by ENEOS Materials Corporation)

(B) Filler

(B-1) Carbon black (Seast 6, manufactured by Tokai Carbon Co., Ltd., a nitrogen adsorption BET specific surface area: 120 $m^2$/g, and a tap density:400 g/L)
(B-2) Silica produced by wet-process (Nipsil AQ, manufactured by Tosoh Silica Corporation, a nitrogen adsorption BET specific surface area: 200 $m^2$/g, a tap density:300 g/L, a silanol group density: 6 groups/$nm^2$, and a pycnometer true density: 2.1 $g/cm^3$)
(B-3) Hydrophilic fumed silica (REOLOSIL QS-40, manufactured by Tokuyama Corporation, a nitrogen absorption BET specific surface area: 380 $m^2$/g, a tap density: 50 g/L, a silanol group density: 2.3 groups/$nm^2$, and a pycnometer true density: 2.2 $g/cm^3$)
(B-4) Hydrophilic fumed silica (REOLOSIL QS-30C, manufactured by Tokuyama Corporation, a nitrogen absorption BET specific surface area: 300 $m^2$/g, a tap density: 100 g/L, a silanol group density: 2.1 groups/$nm^2$, and a pycnometer true density: 2.2 $g/cm^3$)
(BM-1) to (BM-3) Fumed silica compressed using a ball mill
(BC-1) to (BC-4) Fumed silica compressed using a uniaxial compressor

(C) Silane coupling agent
(C-1) Polysulfide-based coupling agent (Si69, manufactured by EVONIK)
(D) Diol
(D-1) 1,3-propane diol
(E) Other ingredients

(E-1) Lubricant (stearic acid, Bead Stearic Acid YR, manufactured by NOF Corporation)
(E-2) Lubricant (Zinc oxide, Zinc oxide II, manufactured by SEIDO CHEMICAL INDUSTRY CO., LTD)
(E-3) Antioxidant (Ozonone 6C, manufactured by Seiko Chemical Co., Ltd.)
(E-4) Process oil (Aromax 3 (TDAE Oil), manufactured by FUJI KOSAN COMPANY, LTD)

[Preparation of Compressed Fumed silica Using Ball Mill]

A fumed silica which was compressed using a ball mill was made as described in below. That is, about 200 g of a fumed silica (B-4) was placed into a ball mill of 7 L made of alumina (a filling factor of alumina balls each having a ball size φ 32 mm was 30%). Then, under the conditions of room temperature and a rotational speed of 300 rpm, a pulverization was carried out for about 3 hours to obtain a compressed fumed silica (BM-1) having a tap density of 200 g/L. A compressed fumed silica (BM-2) having a tap density of 250 g/L and a compressed fumed silica (BM-3) having a tap density of 320 g/L were obtained by extending the ball milling time to 5 hours and 8 hours.

[Preparation of Compressed Fumed silica Using Uniaxial Compressor]

A fumed silica which was compressed using a uniaxial compressor was made as described in below. That is, the fumed silica (B-4) was compressed using WP-230 × 80 compactor as a uniaxial compressor made by FREUND TURBO CORPORATION. A roller clearance was set to 0.5 mm, a rotational speed was set to 10 rpm, and a compressing pressure applied on the rollers were fixed to 0.3 T/cm. A decompression degree of a screw feeder which feeds powder to the roller varied between -10 kPa to -45 kPa; and thereby, a compressed fumed silica having different powder tap densities were obtained. The tap densities of the obtained compressed fumed silica were respectively 200 g/L (BC-1), 250 g/L (BC-2), 320 g/L (BC-3), and 385 g/L (BC-4).

The tap density of the filler was measured as described in below. First, a resin-made graduated cylinder of 1 L was placed on an electric scale and tared, then the cylinder was filled with about 1 L of the filler to record weight M1 (g). Then, the cylinder was manually tapped for 30 times from a height of about 10 cm, and a volume V1 (ml) was measured, thereby a tap density $\rho 1$ was calculated using the below formula. Results are shown in Table 1.

$$\text{Tap density } \rho 1 = 1000 \times M1/V1 \text{ (g/L)}$$

Also, an apparent density of the filler obtained using a tamped packing method was measured as described below. Each filler was passed through a sieve having an opening of 500 $\mu$m and dried for 2 hours at 105°C, and then it was dried. Then, a dried material was used which was obtained by cooling using a desiccator. A measuring cylinder of a tamp volume meter was filled with 200 $\pm$ 10 ml of the filler, and a weight M2 (g) of the filler was recorded. Then, the measuring cylinder was rotated for 1250 times using a cam of the tamp volume meter to measure a volume V2 (mL), and an apparent density $\rho 2$ obtained using a tamped packing method was calculated from the below equation. Other conditions were set according to JIS 5101-12-2 and a measurement was carried out. Results are shown in Table 1.

Apparent density obtained using a tamped packing method $\rho 2 = 1000 \times M2/V2$ (g/L)

Regarding each filler, a nitrogen absorption BET specific surface area of the filler was measured by a nitrogen absorption BET method using BELSOP MINI X made by Microtrac. Results are shown in Table 1.

Also, a surface silanol group density of each fumed silica ((B-3), (B-4), (BM-1) to (BM-3), (BC-1) to (BC-4)) was measured using a device which an evaporator for ores (ADP-512, manufactured by KYOTO ELECTRONICS MANUFACTURING CO., LTD.) attached to a Karl Fischer Moisture Titrator (MKC-610, manufactured by KYOTO ELECTRONICS MANUFACTURING CO., LTD.). That is, temperature was raised to 130°C in a low-temperature furnace of the evaporator for ores, and a moisture amount equivalent to a silica loss on drying was measured by a coulometric titration method using MKC-610. Then, a moisture amount equivalent to a loss on ignition was measured by a coulometric titration method using a high-temperature furnace which was heated to 1000°C. The moisture amount equivalent to a loss on ignition which occurred between 130°C to 1000°C was converted into a silanol group density using the below equation. Results are shown in Table 1.

Silanol group density (number of groups/nm$^2$) = 668.9 $\times$ H$_2$O(%)/Specific surface area (m$^2$/g)

The pore peak radius and the pore volume of each fumed silica ((B-3), (B-4), (BM-1) to (BM-3), (BC-1) to (BC-4)) were measured as described in below. Using BELSOP MINI X made by Microtrac, nitrogen was absorbed at liquid nitrogen temperature to a sample which was degassed at pressure of 1 Pa or less at 150°C; and thereby, an absorption isotherm was obtained. To the obtained absorption isotherm, the pore peak radius and the pore volume were calculated based on BJH theory using an analysis soft ware attached to BELSOP MINI X. Results are shown in Table 1.

[Table 1]

| | | BET sepecific surface area (m²/g) | Tap density $\rho 1$ (g/L) | Apparent density obtained using a tamped packing method $p2$ (g/L) | Silanol group density (number/nm²) | Pore peak radius (nm) | Pore volume (mL/g) |
|---|---|---|---|---|---|---|---|
| Filler | B-1 | 120 | 400 | 380 | - | - | - |
| | B-2 | 200 | 300 | 290 | - | - | - |
| | B-3 | 380 | 50 | 40 | 2.3 | 53 | 1.1 |
| | B-4 | 300 | 100 | 76 | 2.1 | 92 | 1.9 |
| | BM-1 | 300 | 200 | 160 | 3.0 | 48 | 1.8 |
| | BM-2 | 300 | 250 | 184 | 3.0 | 22 | 1.7 |
| | BM-3 | 300 | 320 | 256 | 3.0 | 18 | 1.2 |
| | BC-1 | 300 | 216 | 170 | 2.0 | 39 | 2.6 |
| | BC-2 | 300 | 252 | 184 | 2.2 | 34 | 2.0 |
| | BC-3 | 300 | 320 | 250 | 2.3 | 22 | 1.6 |
| | BC-4 | 300 | 385 | 312 | 2.3 | 19 | 1.5 |

The obtained kneaded product and the below shown (E-5), (E-6), and (E-7) were added and mixed using a 6-inch roll tester to obtain the tire rubber composition. Note that, the blending amount of sulfur was set to the amount shown in Table 2 taking into consideration of the sulfur amount contained in other additives.

(E) Other ingredients

(E-5) Sulfur (5% GOLDEN FLOWER OIL TREATED SULFUR POWDER, manufactured by Tsurumi Chemical Industry Co., ltd.)

(E-6) Vulcanizing accelerator (N-cyclohexyl-2-benzothiazol sulfenamide (CBS), Sanseller-CM-G, manufactured by SANSHIN CHEMICAL INDUSTRY CO., LTD.)

(E-7) Vulcanizing accelerator (1,3-diphenylguanidine (DPG), Sanseller-D-G, manufactured by SANSHIN CHEMICAL INDUSTRY CO., LTD.)

[Table 2]

| | | | Comparative example 1 | Comparative example 2 | Comparative example 3 | Comparative example 4 | Comparative example 5 | Example 1 | Example 2 | Example 3 | Example 4 | Example 5 | Comparative example 6 | Comparative example 7 |
|---|---|---|---|---|---|---|---|---|---|---|---|---|---|---|
| Tire rubber composition | Diene-based rubber | A-1 | 80 | 80 | 80 | 80 | 80 | 80 | 80 | 80 | 80 | 80 | 80 | 80 |
| | | A-2 | 20 | 20 | 20 | 20 | 20 | 20 | 20 | 20 | 20 | 20 | 20 | 20 |
| | Filler | B-1 | 67 | | | | | | | | | | | |
| | | B-2 | | 82 | | | | | | | | | | |
| | | B-3 | | | 51 | | | | | | | | | |
| | | B-4 | | | | 51 | 51 | | | | | | | |
| | | BM-1 | | | | | | 51 | | | | | | |
| | | BM-2 | | | | | | | 51 | | | | | |
| | | BM-3 | | | | | | | | | | | 74 | |
| | | BC-1 | | | | | | | | 50 | | | | |
| | | BC-2 | | | | | | | | | 51 | | | |
| | | BC-3 | | | | | | | | | | 51 | | |
| | | BC-4 | | | | | | | | | | | | 52 |
| | Coupling agent ($\mu$ mol/m$^2$) | C-1 | 0 | 0.74 | 0.74 | 0.74 | 1.11 | 0.74 | 0.74 | 0.74 | 0.74 | 0.74 | 0.74 | 0.74 |
| | Diol ($\mu$ mol/m$^2$) | D-1 | 0 | 0 | 6.80 | 6.80 | 10.20 | 6.80 | 6.80 | 6.80 | 6.80 | 6.80 | 6.80 | 6.80 |
| | Other components | E-1 | 3 | 3 | 3 | 3 | 3 | 3 | 3 | 3 | 3 | 3 | 3 | 3 |
| | | E-2 | 2 | 2 | 2 | 2 | 2 | 2 | 2 | 2 | 2 | 2 | 2 | 2 |
| | | E-3 | 2 | 2 | 2 | 2 | 2 | 2 | 2 | 2 | 2 | 2 | 2 | 2 |
| | | E-4 | 23 | 23 | 23 | 23 | 23 | 23 | 23 | 23 | 23 | 23 | 23 | 23 |
| | | E-5 | 2.2 | 1.5 | 1.5 | 1.5 | 1.2 | 1.5 | 1.5 | 1.5 | 1.5 | 1.5 | 1.5 | 1.5 |
| | | E-6 | 1.8 | 1.8 | 1.8 | 1.8 | 1.8 | 1.8 | 1.8 | 1.8 | 1.8 | 1.8 | 1.8 | 1.8 |
| | | E-7 | 0.5 | 0.5 | 0.5 | 0.5 | 0.5 | 0.5 | 0.5 | 0.5 | 0.5 | 0.5 | 0.5 | 0.5 |
| Physical property of tire rubber composition | Mooney viscosity (ML4+1 100°C) | | 67 | 67 | - | - | - | 61 | 62 | 62 | 65 | 68 | 75 | 72 |

EP 4 667 417 A1

12

(continued)

| | | Comparative example 1 | Comparative example 2 | Comparative example 3 | Comparative example 4 | Comparative example 5 | Example 1 | Example 2 | Example 3 | Example 4 | Example 5 | Comparative example 6 | Comparative example 7 |
|---|---|---|---|---|---|---|---|---|---|---|---|---|---|
| | A hardness | 65 | 65 | 42 | 44 | 45 | 65 | 65 | 65 | 65 | 65 | 65 | 65 |
| Physical properties of tire rubber material | Rolling resistance index | 1.00 | 1.59 | - | - | - | 4.03 | 3.97 | 3.65 | 3.92 | 4.11 | 3.26 | 4.19 |
| | Wear resistance index | 1.00 | 0.83 | - | - | - | 1.43 | 1.18 | 1.61 | 1.50 | 2.08 | 0.99 | 0.62 |
| | Strength index | 1.00 | 1.18 | - | - | - | 1.06 | 1.00 | 1.22 | 1.09 | 1.00 | 0.52 | 0.36 |
| | Heat resistance index | 0.90 | 0.88 | - | - | - | 1.04 | 1.05 | 1.04 | 1.03 | 1.02 | 1.04 | 1.06 |

A test piece of the obtained tire rubber composition was made to carry out the below-described evaluations. The obtained test piece was used to evaluate the below described physical properties.

(Processing property: Mooney viscosity)

Regarding the obtained test piece of the tire rubber composition, Mooney viscosity at 100°C (ML1 + 4 100°C) was measured in accordance with JIS K6300-1 using a Mooney viscometer (VR-1132, manufactured by Ueshima Seisakusho Co., Ltd.). The lower the Mooney viscosity, the better the processing property of the tire rubber composition tends to be. The results are shown in Table 2.

(Preparation of Tire Rubber Material Test Piece)

Next, the obtained tire rubber composition was press-vulcanized at 160°C for T90 + 1 minute; and thereby, the tire rubber material was obtained. A test piece was made from the obtained tire rubber material to perform evaluations shown below. The obtained test piece was used to evaluate the below described physical properties.

(A hardness)

Regarding the test piece of the obtained tire rubber material, hardness (Shore A hardness) was measured using a durometer in accordance with JIS K6253 Type A. Since the target A hardness is 65 for the tire rubber material, preferably, the A hardness of the test piece is also around 65. Note that, in Comparative examples 3 to 5, the tap density of the filler was low; thus, the blending amount (blending volume) per once was large. Therefore, the filler was not kneaded into other components, and the filler was lost from the mixer. Hence, in Comparative example 3 to 5, it was only possible to blend the amount of the filler smaller than an expected blending amount. As a result, the A hardness of the obtained rubber material became extremely low, and the obtained rubber material was not suitable as a tire rubber material. Results are shown in Table 2.

(Fuel Efficiency: tan δ at 60°C)

A measurement was conducted to the test piece of the obtained tire rubber material using a dynamic viscoelasticity tester (VR-7130, manufactured by Ueshima Seisakusho Co., Ltd.) under the conditions described below in accordance with JIS K6394. Based on the measured values at 60°C, tan δ (60°C) was calculated.

Measurement temperature: 60°C
Static strain: 10%
Dynamic strain: ±2%
Frequency: 10 Hz

The calculated tan δ (60°C) of Standard Example 1 (Comparative Example 1) was set to 1.0, and a rolling resistance index was calculated using an equation shown below. The larger the index, the better the rolling resistance. The results are shown in Table 2.

(Rolling Resistance Index) = (tan δ (60°C) of Standard Example 1)/(tan δ (60°C) of Example)

(Wear Resistance: FPS Wear Loss)

For the test piece of the obtained tire rubber material, the FPS wear loss was measured using an FPS abrasion tester (Model AB-2012, manufactured by Ueshima Seisakusho Co., Ltd.) under the conditions of a temperature of 35°C, a load of 40 N, a slip ratio of 10%, and a test time of 2 minutes. A volume loss was calculated from the FPS wear amount, and the loss amount of Standard example 1 (Comparative example 1) was set to 1.0; thereby, a wear index was calculated using the below equation. The larger the index, the better the wear resistance. The results are shown in Table 2.

(Wear Index) = (Loss amount of Standard example 1)/(Loss amount of Example)

(Heat Aging Resistance)

The obtained tire rubber composition was vulcanized at 160°C for T90 + 1 minute using a mold with a thickness of 2 mm to obtain a vulcanized rubber sheet. The obtained vulcanized rubber sheet was punched into samples using a JIS No. 3 dumbbell die. The samples were heat aged in a Geer oven for 5 days (120 hours) set at a temperature of 80°C. Then, tensile strength at break was measured using a tensile tester in accordance with JIS K6251 together with a non-aged sample. A ratio between the tensile strength at break of the non-aged sample and the tensile strength at break of the aged sample was obtained, and the ratio was used as an index of heat aging resistance. A heat resistance index was calculated using the below equation. When the heat resistance index was 1 or greater, it was considered to have excellent heat aging resistance, and when the heat resistance index was less than 1, it was considered that the tensile strength at break had decreased due to heat aging; hence, the heat aging resistance was lowered. The results are shown in Table 2.

(Heat resistance index) = {(Tensile strength at break of sample after heat aging)/(Tensile strength at break of non-aged sample)}

Also, the tensile strength at break of Standard example 1 (Comparative example 1) prior to a heat aging test was set to 1.00, and a strength index was calculated from the below equation. The larger the strength index, the better the strength. The results are shown in Table 2.

(Strength index) = (Tensile strength at break of Example)/(Tensile strength at break of Standard example 1)

According to Table 2, in the case that the diene-based rubber is an SBR-based rubber, by using the fumed silica for rubber composition having one of the above-mentioned physical properties as the filler, the number of times that the fumed silica for rubber composition is blended can be lowered, and also the tire rubber material with good properties can be obtained. On the other hand, when the number of times that the filler with low tap density is blended was lowered, the amount of the filler blended becomes smaller than the expected blending amount, thus, the rubber material with a desired hardness can not be obtained.

(Experiment 2)

In Experiment 2, the diene-based rubber was a natural rubber. The below component (A-3), and the above-mentioned components (B) to (D), and (E-1) to (E-4) were placed in Labo Plastomill (BB600, manufactured by Toyo Seiki Seisaku-sho, Ltd.) of a Banbury mixer type having a capacity of 0.6 L so that the blending amounts of the components with respect to 100 parts by mass of the natural rubber satisfied the amounts shown in Table 3. After placing the components, a kneaded material was made under the same conditions as in the case of Experiment 1. Note that, components other than (A-3), that is, the filler (B), the silane coupling agent (C), the diol (D), and other components (E-1) to (E-4) were the same components as in the case of Experiment 1. Therefore, the physical properties of the filler used in Experiment 2 are as shown in Table 1.

(A) Diene-based rubber

(A-3) Natural Rubber made in Vietnam: SVR

The kneaded product obtained in above and the above-mentioned (E-5) and the below shown (E-8) were added and mixed using a 6-inch roll tester; and thereby, the tire rubber composition was obtained. Note that, a blending amount of sulfur was determined by taking into consideration of the sulfur amount contained in the other additive components shown in Table 3. Also, the component (E-5) as one of the other components was the same component as in the case of Experiment 1.

(E) Other components

(E-8) Vulcanizing accelerator (N-(tert-butyl)-2-benzothiazol sulfenamide (TBBS), Sanseller-NS-G, manufactured by SANSHIN CHEMICAL INDUSTRY CO., LTD.)

A test piece was made from the obtained tire rubber composition using the same method as in the case of Experiment 1, and the physical properties were evaluated under the same method and conditions as in the case of Experiment 1. Further, the obtained tire rubber composition was vulcanized under the same conditions as Experiment 1, and thereby the tire rubber material was obtained. A test piece was made from the obtained tire rubber material using the same method as Experiment 1, and physical properties were evaluated under the same method and conditions as in the case of Experiment 1. Results are shown in Table 3.

[Table 3]

| | | | Example 6 | Example 7 | Example 8 | Comparative example 8 | Comparative example 9 | Comparative example 10 | Comparative example 11 |
|---|---|---|---|---|---|---|---|---|---|
| Tire rubber composition | Diene-based rubber | A-3 | 100 | 100 | 100 | 100 | 100 | 100 | 100 |
| | Filler | B-1 | | | | 45 | | | |
| | | B-2 | | | | | 53 | | |
| | | B-3 | | | | | | | |
| | | B-4 | | | | | | 41 | |
| | | BM-1 | | | | | | | |
| | | BM-2 | | | | | | | |
| | | BM-3 | | | | | | | |
| | | BC-1 | 36 | | | | | | |
| | | BC-2 | | 36 | | | | | |
| | | BC-3 | | | 41 | | | | |
| | | BC-4 | | | | | | | 43 |
| | Coupling agent ($\mu$mol/m$^2$) | C-1 | 0.74 | 0.74 | 0.74 | 0 | 0.74 | 0.74 | 0.74 |
| | Diol ($\mu$mol/m$^2$) | D-1 | 4.86 | 4.86 | 4.86 | 0 | 0 | 4.86 | 4.86 |
| | Other components | E-1 | 3 | 3 | 3 | 3 | 3 | 3 | 3 |
| | | E-2 | 3 | 3 | 3 | 3 | 3 | 3 | 3 |
| | | E-3 | 2 | 2 | 2 | 2 | 2 | 2 | 2 |
| | | E-4 | 2 | 2 | 2 | 2 | 2 | 2 | 2 |
| | | E-5 | 1.75 | 1.75 | 1.75 | 2.42 | 1.75 | 1.75 | 1.75 |
| | | E-6 | - | - | - | - | - | - | - |
| | | E-7 | - | - | - | - | - | - | - |
| | | E-8 | 1.6 | 1.6 | 1.6 | 1.6 | 1.6 | 1.6 | 1.6 |

EP 4 667 417 A1

16

(continued)

|  |  | Example 6 | Example 7 | Example 8 | Comparative example 8 | Comparative example 9 | Comparative example 10 | Comparative example 11 |
|---|---|---|---|---|---|---|---|---|
| Physical property of tire rubber composition | Mooney viscosity (ML4+1 100°C) | 40 | 46 | 60 | 70 | 77 | - | 82 |
| Physical properties of tire rubber material | A hardness | 65 | 65 | 65 | 65 | 65 | 53 | 65 |
|  | Rolling resistance index | 2.24 | 2.24 | 2.07 | 1.00 | 1.28 | - | 1.89 |
|  | Wear resistance index | 1.53 | 1.50 | 1.20 | 1.00 | 1.20 | - | 0.70 |
|  | Strength index | 1.16 | 1.17 | 1.00 | 1.00 | 0.90 | - | 0.44 |
|  | Heat resistance index | 1.07 | 1.05 | 1.09 | 0.85 | 0.99 | - | 1.09 |

According to Table 3, even when the diene-based rubber was a natural rubber, by using the fumed silica for rubber composition having the above-mentioned physical properties as the filler, it was confirmed that the tire rubber material having good properties can be obtained while reducing the number of times that the fumed silica for rubber composition is blended. Also, when the number of times that the filler with low tap density is blended is reduced, a smaller amount of the filler than the expected blending amount can only be blended; thus, it was confirmed that the rubber material having a desired hardness cannot be obtained.

INDUSTRIAL APPLICABILITY

The fumed silica according to the present disclosure can be obtained by compressing a bulky fumed silica into a form which does not generate dust. Therefore, by using the fumed silica according to the present disclosure, it is possible to prevent dust generation and reducing a processing time by being able to readily blend in a medium not only when fumed silica is added to the above-mentioned tire rubber composition, but also when the fumed silica is added to a silicone rubber other than tires, and a clear rubber and paste for shoes.

**Claims**

1. A fumed silica for rubber composition having a tap density of 200 g/L or greater, a pore peak radius of 22 nm or larger obtained by applying a BJH method to a nitrogen absorption isotherm, and a pore volume of 1.6 mL/g or greater.

2. The fumed silica for rubber composition according to claim 1, wherein a BET specific surface area of the fumed silica for rubber composition is 180 $m^2$/g or greater and 500 $m^2$/g or less.

3. The fumed silica for rubber composition according to claim 1 or 2, wherein the fumed silica for rubber composition is an untreated fumed silica for rubber composition.

4. A method for compressing a fumed silica, wherein uniaxial compression is performed to a fumed silica having a tap density of less than 200 g/L to obtain a compressed fumed silica having a tap density of 200 g/L or greater.

**Amended claims under Art. 19.1 PCT**

1. A fumed silica for rubber composition having a tap density of 200 g/L or greater, a pore peak radius of 22 nm or larger obtained by applying a BJH method to a nitrogen absorption isotherm, and a pore volume of 1.6 mL/g or greater.

2. The fumed silica for rubber composition according to claim 1, wherein a BET specific surface area of the fumed silica for rubber composition is 180 $m^2$/g or greater and 500 $m^2$/g or less.

3. The fumed silica for rubber composition according to claim 1 or 2, wherein the fumed silica for rubber composition is an untreated fumed silica for rubber composition.

4. A method for compressing a fumed silica, wherein uniaxial compression is performed to a fumed silica having a tap density of less than 200 g/L to obtain a compressed fumed silica having a tap density of 200 g/L or greater, a pore peak radius of 22 nm or larger obtained by applying a BJH method to a nitrogen absorption isotherm, and a pore volume of 1.6 mL/g or greater.

## INTERNATIONAL SEARCH REPORT

| International application No. |
|---|
| **PCT/JP2024/012335** |

**A. CLASSIFICATION OF SUBJECT MATTER**

***C01B 33/18***(2006.01)i; ***C08K 3/36***(2006.01)i; ***C08K 5/053***(2006.01)i; ***C08K 5/548***(2006.01)i; ***C08L 21/00***(2006.01)i; ***C09C 1/28***(2006.01)i

FI:   C01B33/18 E; C01B33/18 Z; C08K3/36; C08K5/053; C08K5/548; C08L21/00; C09C1/28

According to International Patent Classification (IPC) or to both national classification and IPC

**B. FIELDS SEARCHED**

Minimum documentation searched (classification system followed by classification symbols)

C01B33/18; C08K3/36; C08K5/053; C08K5/548; C08L21/00; C09C1/28

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2022-72813 A (TOKUYAMA CORPORATION) 17 May 2022 (2022-05-17) claims, examples 1-1 to 1-5, table 1 | 1-3 |
| Y | | 4 |
| X | JP 2022-76586 A (TOKUYAMA CORPORATION) 20 May 2022 (2022-05-20) claims, examples 1-1 to 1-5, table 1 | 1-3 |
| Y | | 4 |
| X | JP 8-253309 A (DEGUSSA AG) 01 October 1996 (1996-10-01) claims, examples 1-2, 4-6, 11-14, tables 2-4 | 1-3 |
| Y | JP 2004-161611 A (DEGUSSA AG) 10 June 2004 (2004-06-10) claims, examples | 4 |

☑ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 May 2024** | **04 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
|---|
| **PCT/JP2024/012335** |

| C. | DOCUMENTS CONSIDERED TO BE RELEVANT | |
|---|---|---|
| Category* | Citation of document, with indication, where appropriate, of the relevant passages | Relevant to claim No. |
| Y | JP 2016-117950 A (SUMITOMO CHEMICAL COMPANY, LIMITED) 30 June 2016 (2016-06-30)<br>    paragraph [0116] | 4 |
| Y | JP 6-116038 A (MITSUBISHI GAS CHEMICAL COMPANY, INC.) 26 April 1994 (1994-04-26)<br>    paragraph [0010] | 4 |

Form PCT/ISA/210 (second sheet) (July 2022)

## INTERNATIONAL SEARCH REPORT
### Information on patent family members

International application No.

**PCT/JP2024/012335**

| Patent document cited in search report | | | Publication date (day/month/year) | Patent family member(s) | | | Publication date (day/month/year) |
|---|---|---|---|---|---|---|---|
| JP | 2022-72813 | A | 17 May 2022 | WO | 2022/091953 | A1 | |
| | | | | claims, examples 1-1 to 1-5, table 1 | | | |
| | | | | EP | 4219615 | A1 | |
| | | | | TW | 202222689 | A | |
| | | | | KR | 10-2023-0098174 | A | |
| | | | | CN | 116490558 | A | |
| JP | 2022-76586 | A | 20 May 2022 | WO | 2022/091953 | A1 | |
| | | | | claims, examples 1-1 to 1-5, table 1 | | | |
| | | | | EP | 4219615 | A1 | |
| | | | | TW | 202222689 | A | |
| | | | | CN | 116490558 | A | |
| | | | | KR | 10-2023-0098174 | A | |
| JP | 8-253309 | A | 01 October 1996 | US | 5776240 | A | |
| | | | | claims, examples 1-2, 4-6, 11-14, tables 2-4 | | | |
| | | | | EP | 725037 | A1 | |
| | | | | KR | 10-1996-0031342 | A | |
| | | | | CN | 1134399 | A | |
| JP | 2004-161611 | A | 10 June 2004 | JP | 2001-72427 | A | |
| | | | | claims, examples | | | |
| | | | | US | 2005/0220692 | A1 | |
| | | | | claims, examples | | | |
| | | | | US | 2005/0272826 | A1 | |
| | | | | claims, examples | | | |
| | | | | US | 2007/0015652 | A1 | |
| | | | | claims, examples | | | |
| | | | | EP | 1074513 | A2 | |
| | | | | KR | 10-2001-0049971 | A | |
| JP | 2016-117950 | A | 30 June 2016 | (Family: none) | | | |
| JP | 6-116038 | A | 26 April 1994 | (Family: none) | | | |

Form PCT/ISA/210 (patent family annex) (July 2022)

**REFERENCES CITED IN THE DESCRIPTION**

**Patent documents cited in the description**

- WO 2016104840 A

- WO 2004099075 A